Europäisches Patentamt

European Patent Office

Office européen des brevets

(19)

(11) Numéro de publication : **0 159 594**
**B1**

(12) **FASCICULE DE BREVET EUROPÉEN**

(45) Date de publication du fascicule du brevet :
15.06.88

(51) Int. Cl.⁴ : **G 03 B 15/02**

(21) Numéro de dépôt : 85104059.2

(22) Date de dépôt : 03.04.85

(54) Appareil d'éclairage à haut pouvoir de diffusion.

(30) Priorité : 16.04.84 CH 1898/84

(43) Date de publication de la demande :
30.10.85 Bulletin 85/44

(45) Mention de la délivrance du brevet :
15.06.88 Bulletin 88/24

(84) Etats contractants désignés :
DE FR GB IT SE

(56) Documents cités :
EP-A- 0 048 185
FR-A- 1 388 982
FR-A- 2 468 144

(73) Titulaire : Baliozian, Mardick
Ontario Place 10 East Ontario Street
60611 Chicago (US)

(72) Inventeur : Baliozian, Mardick
Ontario Place 10 East Ontario Street
60611 Chicago (US)

(74) Mandataire : Tony-Durand, Serge
Cabinet Tony-Durand 77, rue Boissière
F-75116 Paris (FR)

Jouve, 18, rue St-Denis, 75001 Paris, France

EP 0 159 594 B1

## Description

La présente invention concerne les appareils d'éclairage destinés à être utilisés notamment pour des prises de vues photographiques, cinématographiques, ou similaires.

Pour des applications de ce genre les sources de lumière habituellement utilisées — telles que petits tubes flash, lampes halogènes, lampes à vapeurs de métal ou à décharge de gaz — présentent des inconvénients si elles sont employées telles quelles pour éclairer le sujet. En effet l'éclairage obtenu est trop dur et comporte des ombres trop nettes ainsi que certains reflets trop brillants. Pour obtenir un éclairage plus doux et plus satisfaisant, il serait nécessaire d'accroître considérablement les dimensions de la source de lumière. En effet ceci aurait pour conséquence que les ombres seraient plus diffuses et moins accentuées. Par ailleurs le sujet à éclairer le serait dans de meilleures conditions, car il ne serait pas gêné par une lumière éblouissante. Cependant pour obtenir un résultat réellement suffisant, il serait nécessaire de recourir à un accroissement considérable des dimensions de la source de lumière.

Pour résoudre ce problème, il a déjà été proposé différents types d'appareils d'éclairage conçus pour réaliser, à partir d'une source de lumière de faible dimension, un éclairage diffus de plus grande dimension, orienté en direction du sujet à éclairer cf. FR-A-2'468'144. A cet effet ces appareils comportent des écrans de diffusion sur leur face externe.

Ainsi il a déjà été proposé des appareils comportant des réflecteurs de forme courbe réalisés en aluminium ou en matière plastique moulée. Cependant ces appareils sont particulièrement onéreux et les résultats obtenus ne sont pas pleinement satisfaisants.

Il a été également proposé des réflecteurs pliants en forme de parapluie, au centre duquel est disposée une source de lumière. De tels appareils ont l'avantage d'être peu coûteux. Toutefois ils présentent un certain nombre de désavantages au point de vue pratique et au point de vue photographique, ils ont également l'inconvénient de produire certains reflets gênants (reflet circulaire avec au centre, un point noir correspondant à l'emplacement de la source de lumière et des lignes correspondant aux éléments d'armature du parapluie).

Pour l'application en cause, il existe également des appareils d'éclairage comportant des boîtiers rigides en forme de pyramide ou similaire qui possèdent des parois internes réfléchissantes disposées autour d'une source de lumière, et un écran de diffusion placé devant. Cependant les appareils actuels de ce genre sont relativement lourds et leur prix de revient est élevé. Par ailleurs l'éclairage réalisé n'est pas pleinement satisfaisant.

C'est pourquoi la présente invention a pour but de réaliser un appareil d'éclairage destiné à l'application en cause mais qui est conçu de façon à assurer un excellent éclairage du sujet à éclairer avec une diffusion satisfaisante de la lumière sur celui-ci, mais sans dispersion inutile de lumière en dehors de la zone à éclairer. De plus la conception de cet appareil est telle que celui-ci soit d'un prix de revient particulièrement réduit et qu'il puisse par ailleurs être déplacé aisément par rapport au sujet à éclairer.

A cet effet le présent appareil, qui comporte un écran de diffusion placé devant une source de lumière portée par un socle dont le contour affecte sensiblement la forme d'un triangle équilatéral, est caractérisé en ce que cet écran de diffusion forme un dièdre ouvert vers l'arrière dont les faces triangulaires sont planes ou courbes, dirigées à la fois vers l'avant et sur les côtés, et l'espace délimité au-dessus du socle de l'ensemble est fermé à l'arrière par une paroi réfléchissante, la face supérieure du socle étant également réfléchissante, cependant qu'en regard des faces de cet écran de diffusion, il est prévu, sur chaque côté, une joue latérale incurvée ou à facettes dont la face, tournée vefs l'écran de diffusion est réfléchissante, et dont les bords internes sont solidaires à la fois du bord correspondant du socle de l'ensemble et du bord arrière respectif de l'écran de diffusion.

Grâce à l'agencement ainsi prévu, la lumière émise par la source de lumière portée par le socle se trouve convenablement diffusée dans l'espace et dirigée vers le sujet à éclairer de façon à assurer un éclairage relativement doux de celui-ci et sans contraste accentué.

Dans une forme particulièrement avantageuse du présent appareil, la paroi arrière réfléchissante et les deux joues latérales, également réfléchissantes, sont constituées par un panneau d'un seul tenant comportant des lignes d'articulation à l'endroit des délimitations existant entre ces différentes parties, ainsi qu'entre les diverses facettes des joues latérales réfléchissantes, l'écran de diffusion étant lui-même constitué par une seule feuille en matière translucide présentant une ligne de pliure à l'endroit de la délimitation existant entre les deux faces différentes de cet écran.

Selon une autre caractéristique de cette forme de réalisation, le panneau constituant la paroi arrière réfléchissante et les joues latérales réfléchissantes, ainsi que la feuille en matière translucide constituant l'écran de diffusion comportent, sur leurs bords de jonction ou de fixation, des bandes marginales délimitées chacune par une ligne d'articulation et qui présentent des trous dans lesquels sont engagés des organes de jonction ou de fixation assurant d'une part la fixation sur le socle de l'ensemble, et d'autre part la solidarisation de ces éléments entre eux.

Cette forme de réalisation particulière a l'avantage d'être extrêmement peu coûteuse, puisqu'en dehors du socle portant la source d'éclairage correspondante ainsi que les organes annexes, le boîtier est formé simplement par deux pièces différentes et que chacune de celles-ci est constituée très simplement par une plage ou une feuille présentant un certain nombre de pliures ou lignes d'articulation.

Cependant d'autres particularités et avantages de l'appareil selon l'invention apparaîtront au cours de la description suivante d'un exemple de réalisation de celui-ci. Cette description est donnée en référence au dessin annexé à simple titre indicatif, et sur lequel :

La figure 1 est une vue en perspective de la face avant du présent appareil ;

La figure 2 en est une vue en perspective correspondant à une vue plongeante à partir de l'arrière ;

La figure 3 est une vue en perspective du socle ;

La figure 4 est une vue en plan de dessus de la feuille en matière translucide qui constitue l'écran de diffusion, cette feuille étant alors disposée à plat ;

La figure 4a est une vue similaire d'une variante de cet écran de diffusion ;

La figure 5 est une vue en plan de dessus de la plaque réfléchissante en matière plastique qui correspond au second élément constitutif du boîtier de l'appareil (en dehors du socle de celui-ci) ;

La figure 6 est une vue en perspective d'un réflecteur destiné à être utilisé avec une autre source de lumière indépendante et pouvant servir alors de socle au boîtier de réflexion et de diffusion de l'appareil selon l'invention.

Dans l'exemple représenté, l'appareil selon l'invention comporte un socle 1 dont le contour affecte sensiblement la forme d'un triangle équilatéral dont les angles sont tronqués. En effet à l'endroit de ceux-ci le pourtour de ce socle comporte trois petites faces plates 2 et 3. L'une de celles-ci, en l'occurrence la face 2, est destinée à être placée sur le devant de l'appareil et les deux autres à l'arrière. Ce socle constitue un boîtier, fabriqué en métal ou en toute autre matière appropriée et à l'intérieur duquel sont disposés tous les organes électriques, et composants électroniques nécessaires pour l'alimentation des sources de lumière prévues ainsi que pour l'utilisation pratique de l'appareil.

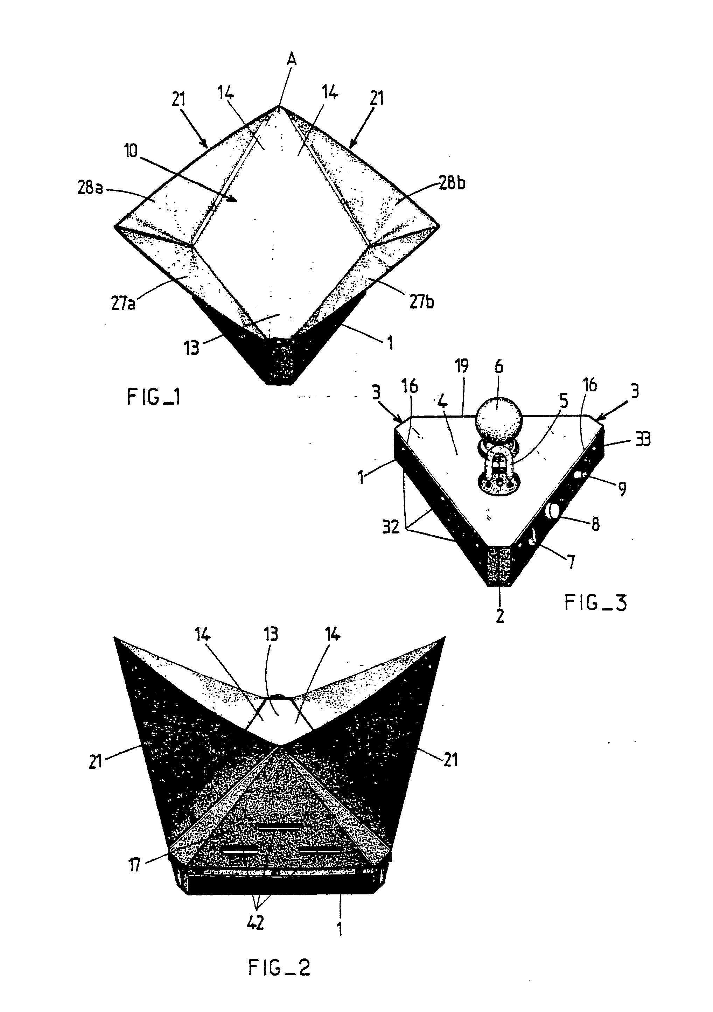

La ou les sources de lumière prévues sont disposées au-dessus de la surface supérieure de ce socle, laquelle est constituée par une plaque 4 en matière réfléchissante ou en matière pourvue d'un revêtement réfléchissant. Dans l'exemple représenté à la figure 3, les sources de lumière prévues consistent en un tube flash 5 et une lampe 6 à incandescence qui a simplement pour but de permettre à l'utilisateur de contrôler l'éclairage réalisé. Cependant, au lieu d'un tube flash et d'une lampe de contrôle, il pourrait être prévu une ou plusieurs lampes à éclairage permanent, par exemple des lampes à incandescence ou des lampes à décharge de gaz, etc. Le socle 1 est équipé des divers organes de commande nécessaires pour l'utilisation du présent appareil notamment un interrupteur général 7, un bouton 8 de réglage d'intensité lumineuse et une prise 9 pour un couplage de synchronisation avec un autre appareil, par exemple un autre appareil d'éclairage.

L'écran de diffusion prévu sur cet appareil est constitué par une feuille 10 en matière translucide qui affecte la forme générale d'un losange. Cette feuille présente deux lignes de pliures 11 partant de l'un de ses angles, en l'occurrence son angle A. Ces deux lignes s'étendent en direction d'un petit côté 12 prévu à la place de l'angle opposé et qui est de même largeur que la petite face avant 2 du socle 1.

Ces deux lignes de pliures 11 délimitent ainsi entre elles un petit triangle effilé 13. Cependant elles délimitent également, de part et d'autre de celui-ci, deux grands triangles 14 qui correspondent aux deux grandes faces de l'écran de diffusion.

En effet la feuille 10 est destinée à être fixée au-dessus du socle 1 dans la position représentée à la figure 1, c'est-à-dire en fixant ses bords inférieurs 15 le long des côtés latéraux 16 du socle 1. Cet écran forme ainsi un dièdre ouvert vers l'arrière et dont l'arête avant est remplacée par la petite face triangulaire effilée 13.

L'espace délimité par cet écran est fermé à l'arrière par une paroi réfléchissante 17 de forme triangulaire dont la base 18 est fixée le long du bord arrière 19 du socle 1. Cependant comme décrit par la suite, cette paroi réfléchissante 17 fait partie d'une plaque 20 en matière plastique qui constitue par ailleurs deux joues réfléchissantes 21, disposées de part et d'autre des deux faces 14 de l'écran de diffusion 10. Chacune de ces joues latérales comporte deux faces distinctes respectivement 27a et 28a sur un côté, 27b et 28b sur l'autre. Les deux faces de chaque joue forment un dièdre ouvert à la fois vers l'avant et vers la face 14 de l'écran de diffusion en regard de laquelle il se trouve disposé.

L'arête de chacun de ces dièdres s'étend entre l'angle arrière correspondant du socle 1 et un point B ou C situé sur le devant de l'appareil. Quant aux deux bords arrière de ces deux joues réfléchissantes, ils sont solidarisés respectivement avec le bord latéral correspondant 16 de la face supérieure du socle 1 et avec le bord arrière respectif 22 de l'écran de diffusion 10.

Cependant, ainsi qu'il a déjà été indiqué, les deux faces triangulaires de ces deux joues réfléchissantes 21 et la paroi arrière réfléchissante 17, également de contour triangulaire, sont avantageusement constituées par une plaque 20 d'un seul tenant, en matière plastique relativement mince. Cette plaque présente des lignes d'articulation en zigzag 23, 24, 25 et 26 délimitant, de part et d'autre de la paroi arrière triangulaire 17, les quatre autres faces triangulaires nécessaires pour constituer les deux joues latérales réfléchissantes 21, en l'occurrence : sur un côté, deux surfaces triangulaires 27a et 28a et sur l'autre côté, deux surfaces triangulaires 27b et 28b.

Toutefois, la paroi arrière 17 n'est pas délimitée par les deux lignes d'articulation 24 et 25, mais par deux autres lignes voisines d'articulation, respectivement 29 et 30 dont chacune forme un triangle effilé de faible surface avec la ligne d'articulation 24 ou 25. Ces deux triangles sont destinés à se trouver respectivement à l'aplomb des petites faces arrière 3 du socle 1 de l'appareil. Du reste, leur base correspond à la largeur de ces petites facettes.

La plaque 20 ainsi prévue est en une matière plastique telle que les différentes lignes d'articulation ménagées dans celle-ci puissent être réalisées simplement par des lignes de compression, ou de rainurage, formées lors de la découpe de cette plaque. A cet effet cette matière est susceptible de se plier sans risque de détérioration à l'endroit de telles lignes d'articulation. La face de cette plaque, qui est destinée à être dirigée vers l'avant, est pourvue d'un revêtement métallique réfléchissant, de préférence à surface grainée. Quant à la face opposée, elle peut être peinte en noir ou en toute autre couleur désirée.

Sur son bord, qui correspond à la base de la paroi arrière réfléchissante 17 et à la base des deux joues latérales réfléchissantes 21, la plaque 20 comporte d'autres lignes d'articulation délimitant des bandes marginales 31 destinées à assurer la fixation de cette plaque sur les bords correspondants du socle 1. A cet effet ces bandes marginales comportent une série de trous 32 destinés à être engagés sur des plots ou boutons saillants 33 prévus sur les côtés correspondants du socle 1. Cependant ceux-ci servent également à assurer la fixation de l'écran de diffusion 10, et éventuellement celle de la plaque réfléchissante disposée sur la surface supérieure 4 du socle 1. En effet cette face peut fort bien ne pas être réfléchissante en elle-même, mais être destinée à recevoir un réflecteur rapporté.

L'écran de diffusion 10 présente lui-même des lignes de pliures s'étendant parallèlement à ses bords et délimitant des bandes marginales, respectivement 38 et 39. Les bandes marginales 38 prévues à la base des deux grandes faces 14 de l'écran de diffusion, et à la base du petit triangle effilé 13 situé au centre, comportent des trous ou des encoches 40 destinées à recevoir les boutons saillants 33 du socle 1.

Pour leur part, les bandes marginales 39 des bords opposés comportent des trous 41 destinés à recevoir des organes de jonction susceptibles d'assurer leur solidarisation avec les bords arrière des joues latérales réfléchissantes 21, d'autres trous complémentaires 42 étant prévus à cet endroit dans la plaque 20. Les organes de jonction utilisés peuvent être des rivets, par exemple de simples rivets élastiques en matière plastique, des boutons-pression, des éléments de tissu adhésif, etc...

L'assemblage de ces divers éléments sur le socle 1 est réalisé en adaptant d'abord les bords supérieurs de l'écran de diffusion 10 sur les côtés correspondants du panneau 20. Ensuite on adapte les bords inférieurs de l'écran de diffusion 10 sur les côtés latéraux correspondants du socle, ce qui confère par là même à cet écran la forme d'un dièdre. Enfin on fixe en place les bords inférieurs de la plaque 20 sur les trois côtés du socle 1, ce qui donne à cette plaque sa forme définitive, dans laquelle elle constitue à la fois la paroi arrière réfléchissante 17 ainsi que les deux faces de chacune des deux joues latérales réfléchissantes 21. Au cours de cette dernière opération on solidarise également les bords arrière des deux grandes faces 14 de l'écran de diffusion avec les bords de la paroi arrière réfléchissante 17. Dans ces conditions les bords inférieurs 38 de cet écran de diffusion se trouvent emprisonnés entre les bords du socle 1 et les bords 31 des deux joues latérales réfléchissantes 21. C'est la raison pour laquelle les bords 38 de cet écran peuvent comporter de simples encoches 40 au lieu de trous.

Il convient d'observer que, sur sa partie constituant la paroi arrière 17, la plaque 20 porte des ouïes 42. Celles-ci sont destinées à permettre l'évacuation de la chaleur dissipée par les deux sources de lumière 5 et 6. Par ailleurs une série de trous 43 sont prévus à quelque distance des bords des faces triangulaires 27a, 28a, 27b et 28b des deux joues latérales réfléchissantes 21. Ces trous sont destinés à permettre la mise en place d'un écran coloré, d'un filtre, d'une grille-spot ou de tout autre accessoire similaire sur le devant de chacune de ces joues latérales réfléchissantes.

Par ailleurs le socle 1 peut avantageusement être pourvu d'un support permettant de l'utiliser de diverses façons et non pas simplement en étant posé sur une surface d'appui. Ce support peut consister en un étrier métallique dont les branches s'articulent sur les côtés du socle 1 et qui peut permettre de fixer celui-ci sur une console ou un pied pliant, du type de ceux utilisés pour des appareils photographiques.

Du fait de la conception du présent appareil, la lumière émise par la source lumineuse, prévue à l'intérieur de celui-ci, se propage de diverses façons vers le sujet à éclairer. Une partie de cette lumière traverse directement les deux grandes faces 14 de l'écran de diffusion ainsi que la petite face effilée 13 prévue au centre de celui-ci. Une fraction de cette lumière atteint alors le sujet à éclairer, cependant que l'autre fraction vient frapper les faces internes réfléchissantes des deux joues latérales 21 et se trouve alors réfléchie, soit vers le sujet à éclairer, soit à nouveau en direction de l'appareil pour subir de nouvelles réflexions. La lumière émise vers l'arrière se trouve réfléchie vers l'avant par la paroi arrière réfléchissante 17 et le sort des rayons lumineux correspondants et alors le même que pour ceux émis directement vers l'avant et vers les côtés. Quant aux rayons lumineux émis vers le bas, ils sont réfléchis vers le haut par le réflecteur 34 et leur sort peut alors être le même que pour les autres rayons lumineux.

Dans ces conditions une grande partie des rayons lumineux émis subit une succession de diverses réflexions, avant d'être diffusée à l'extérieur en direction du sujet à éclairer. Ces diverses réflexions successives s'apparentent à celles se produisant dans un kaléïdoscope. Ceci assure donc de nombreux mélanges de rayons lumineux et procure ainsi une lumière très homogène. De ce fait l'éclairage du sujet est réalisé dans d'excellentes conditions, c'est-à-dire avec une lumière douce et sans contraste accentué. Par ailleurs le mélange des rayons lumineux, par reflets successifs, évite la présence de points de chaleur. Ainsi à partir d'une source lumineuse normale de faible dimension, l'appareil selon l'invention permet d'obtenir une lumière similaire à celle qui émanerait d'une source lumineuse de très grande dimension susceptible d'éclairer un sujet déterminé dans des conditions excellentes.

Ce résultat avantageux est dû à la combinaison de la forme particulière du boîtier du présent appareil avec les deux joues latérales réfléchissantes. A ce sujet, il convient de noter que le boîtier proprement dit -constitué par la face supérieure du socle 1, les deux grandes faces 14 de l'écran de diffusion et la paroi arrière réfléchissante 17- présente la forme générale d'un tétraèdre, alors que les deux joues latérales réfléchissantes présentent chacune pour leur part la forme d'un dièdre ouvert vers la face correspondante 14 de l'écran de diffusion.

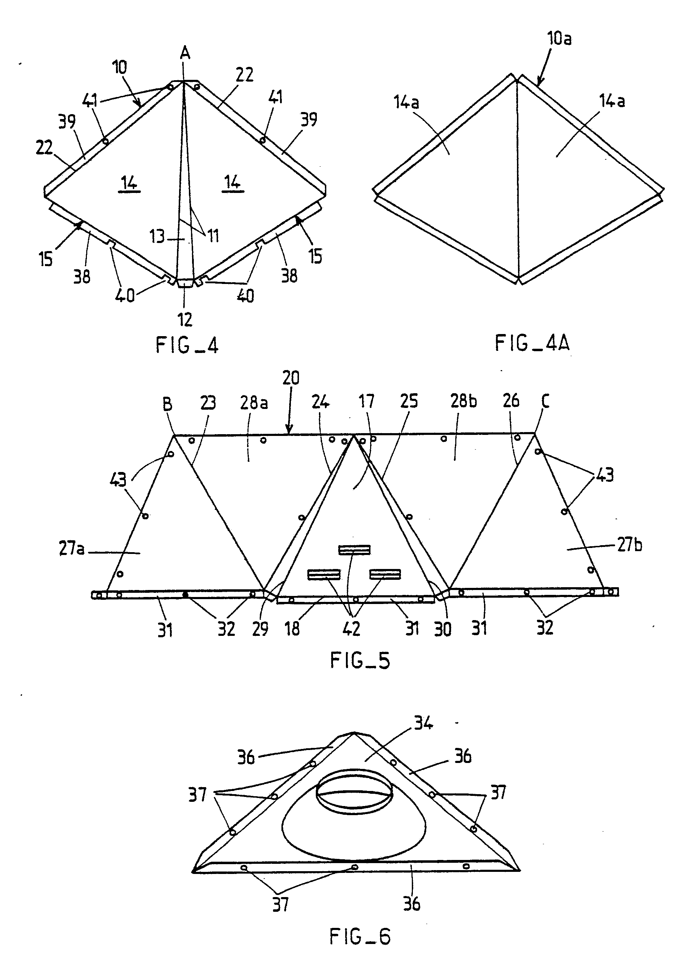

Cependant la forme des différentes parties du présent appareil peut varier, pour autant que l'écran de diffusion comporte toujours des faces latérales dirigées à la fois vers l'avant et vers les côtés et que les joues latérales réfléchissantes forment des sortes de conques ouvertes en direction des faces latérales de cet écran. Ainsi la figure 4A représente une variante de réalisation de l'écran de diffusion dans laquelle la feuille translucide correspondante 10a ne comporte plus un triangle effilé 13 en son milieu. En effet cette feuille comporte simplement deux grandes faces triangulaires 14a. Dans ces conditions l'écran de diffusion formé par cette feuille affecte la forme exacte d'un dièdre. En conséquence, dans cette variante les différents angles du socle 1 ne sont pas tronqués, comme cela était le cas précédemment. Pour sa part la plaque en matière plastique, constituant les surfaces réfléchissantes, ne comporte donc pas les petits triangles effilés prévus dans la plaque 20 représentée à la figure 5.

Mais inversement, au lieu d'une seule grande face 14 ou 14a sur chaque côté, l'écran de diffusion 10 pourrait comporter deux faces distinctes inclinées différemment. Par ailleurs les faces de cet écran pourraient être incurvées au lieu d'être parfaitement planes comme cela est le cas dans la forme de réalisation décrite précédemment.

Pour leur part les joues latérales réfléchissantes 21 pourraient avoir plus de deux faces distinctes. Ces faces pourraient présenter une forme incurvée au lieu d'être parfaitement plane. Du reste au lieu de comporter la forme d'un dièdre ou similaire, ces joues réfléchissantes pourraient présenter la forme de conques incurvées ou analogues.

La réalisation du boîtier du présent appareil à partir de deux éléments seulement en plus du socle 1, c'est-à-dire à partir d'une plaque 20 en matière plastique et d'une feuille translucide 10, est particulièrement avantageuse en ce qui concerne la réduction de prix de revient de l'ensemble. Cependant l'appareil selon l'invention n'est en aucune façon limité à cette seule forme de réalisation. En effet les différentes parties du boîtier pourraient être constituées par des éléments distincts réunis les uns aux autres selon leurs lignes de jonction. Elles pourraient également être fabriquées de différentes autres façons.

Par ailleurs le socle 1 pourrait être réalisé différemment. Ainsi la figure 6 représente un réflecteur 34 pouvant recevoir les éléments constitutifs du boîtier de réflexion et de diffusion de l'appareil selon l'invention. Ce réflecteur est conçu pour permettre d'adapter cet ensemble sur une source de lumière existante. A cet effet ce réflecteur est constitué par une plaque comportant, en son centre, un trou pour le passage de cette source de lumière. Ce trou pouvant être entouré d'une cuvette réfléchissante, de forme parabolique ou autre. La plaque formant ce réflecteur présente des rebords repliés 36 pourvus d'organes de fixation 37 permettant d'adapter, au-dessus de celui-ci, l'écran de diffusion 10 ainsi que la plaque 20 formant les différentes faces réfléchissantes du boîtier.

Du fait de sa conception, l'appareil selon l'invention présente notamment les avantages suivants :

1. Tout d'abord il assure une augmentation considérable de l'ampleur de la lumière émise par une source lumineuse de faible dimension et ce, d'une façon très homogène.

Ceci est dû au processus particulier de propagation de la lumière et aux différentes réflexions déjà décrites précédemment, ainsi qu'à la diffusion de la lumière à travers l'écran 10.

Cet appareil assure une parfaite diffusion de la lumière en direction du sujet à éclairer, mais ce sans dispersion inutile de lumière sur les côtés, comme cela est le cas dans de nombreux appareils actuellement utilisés pour des applications similaires.

2. Les reflets de la source de lumière, sur le sujet éclairé, ne comportent pas de points noirs et les ombres portées sont diffuses et homogènes, ce qui évite deux inconvénients particulièrement gênants existant avec certains appareils actuellement employés.

3. Malgré son volume relativement important, le présent appareil présente un poids réduit. Ceci facilite grandement sa manipulation et permet un transport aisé sur les lieux d'utilisation, c'est-à-dire sur les lieux d'une prise de vues photographiques ou cinématographiques, ou similaires.

4. Cet appareil est très rigide et robuste, bien qu'il soit constitué à partir d'éléments flexibles ou semi-flexibles.

5. Cet appareil présente une forme extérieure très esthétique et très attractive.

6. Il est possible d'équiper cet appareil avec des sources de lumière de natures différentes et dans tous les cas l'éclairage réalisé donne des résultats excellents pour des prises de vues photographiques ou cinématographiques ou similaires, sans que cet appareil comporte des réflecteurs optiques de forme sphérique, élliptique ou autre, dont le prix de revient serait élevé.

7. Cependant, bien que le présent appareil convienne tout particulièrement pour assurer l'éclairage d'un sujet déterminé pendant des prises de vues photographiques, cinématographiques ou similaires, il peut être utilisé pour de nombreuses autres explications.

**Revendications**

1. Appareil d'éclairage à haut pouvoir de diffusion destiné à être utilisé notamment pour des prises de vues photographiques ou cinématographiques ou similaires, et comportant un écran de diffusion (10) placé devant une source de lumière portée par un socle (1) dont le contour affecte sensiblement la forme d'un triangle équilatéral, caractérisé en ce que l'écran de diffusion (10) forme un dièdre ouvert vers l'arrière dont .les faces triangulaires (14) sont planes ou courbes, et l'espace délimité au-dessus du socle (1) de l'ensemble est fermé à l'arrière par une paroi réfléchissante (17), la face supérieure du socle étant également réfléchissante, cependant qu'en regard des faces (14) de cet écran de diffusion (10), il est prévu, sur chaque côté, une joue latérale (21) incurvée ou à facettes dont la face, tournée vers l'écran de diffusion (10) est réfléchissante, et dont les bords internes sont solidaires à la fois du bord correspondant du socle (1) de l'ensemble et du bord arrière respectif de l'écran de diffusion.

2. Appareil d'éclairage selon la revendication 1, caractérisé en ce que la paroi arrière réfléchissante (17) et les deux joues latérales (21), également réfléchissantes, sont constituées par un panneau (20) d'un seul tenant comportant des lignes d'articulation (23, 24, 25, 26) à l'endroit des délimitations existant entre ces différentes parties, ainsi qu'entre les diverses facettes des joues latérales réfléchissantes (21), l'écran de diffusion (10) étant lui-même constitué par une seule feuille en matière translucide présentant des lignes de pliure (11) à l'endroit de la délimitation existant entre les deux faces différentes (14) de cet écran.

3. Appareil d'éclairage selon la revendication 2, caractérisé en ce que le panneau (20) constituant la paroi arrière réfléchissante (17) et les joues latérales réfléchissantes (21), ainsi que la feuille (10) en matière translucide constituant l'écran de diffusion comportent, sur leurs bords de jonction ou de fixation, des bandes marginales (31, 38 et 39) délimitées chacune par une ligne d'articulation et qui comportent des trous dans lesquels sont engagés des organes de jonction ou de fixation assurant d'une part la fixation sur le socle (1) de l'ensemble, et d'autre part la jonction de ces éléments entre eux.

4. Appareil d'éclairage selon l'une des revendications précédentes, caractérisé en ce que l'écran de diffusion (10) correspond à deux faces d'un tétraèdre dont les deux autres faces sont constituées par la paroi arrière réfléchissante (17) et par la face supérieure (4) du socle (1) de l'ensemble, l'arête de séparation des deux faces de l'écran de diffusion (10) étant placée sur le devant de l'appareil.

5. Appareil d'éclairage selon la revendication 4, caractérisé en ce que l'arête avant de l'écran de diffusion (10) est remplacée par une facette triangulaire (13) dont la base (12) de faible largeur est solidaire de l'avant du socle (1) de l'ensemble, cependant que son sommet coïncide avec celui des deux faces (14) de cet écran de diffusion (10).

6. Appareil d'éclairage selon la revendication 4 ou 5, caractérisé en ce que chacune des joues latérales réfléchissantes (21) présente la forme d'un dièdre dont les deux faces affectent la forme de deux triangles réunis par l'un de leurs côtés et dont un autre côté est solidaire soit du côté correspondant de la face supérieure du socle (1) de l'ensemble, soit du côté arrière respectif de l'écran de diffusion (10), le troisième côté étant dirigé vers l'extérieur.

**Claims**

1. Lighting appliance having high diffusion power which is intended to be employed in particular for taking photographs, shooting films or the like, and comprising a diffusion screen (10) placed in front of a light source carried by a base (1) having a contour which assumes substantially the shape of an equilateral triangle, characterized in that the diffusion screen (10) forms a dihedron which is open towards the rear and the triangular faces (14) of which are flat or curved and the space delimited above the base (1) of the unit is closed at the rear by a reflecting wall (17), the top face of the base being also reflecting whilst provision is made opposite to the faces (14) of said diffusion screen (10) and on each side for a curved or faceted lateral cheek (21), the cheek face which is directed towards the diffusion screen (10) being reflecting and the internal edges of said cheek being secured both to the corresponding edge of the base (1) of the unit and to the respective rear edge of the diffusion screen.

2. Lighting appliance in accordance with claim 1, characterized in that the reflecting rear wall (17) and the two lateral cheeks (21) which are also reflecting are constituted by a single-piece panel (20) having hinge lines (23, 24, 25, 26) at the boundaries existing between these different portions as well as between the different facets of the reflecting lateral cheeks (21), the diffusion screen (10) itself being constituted by a single sheet of translucent material having folding lines (11) at the boundary existing between the two different faces (14) of this screen.

3. Lighting appliance in accordance with claim 2, characterized in that the panel (20) constituting the reflecting rear wall (17) and the reflecting lateral cheeks (21) as well as the sheet (10) of translucent material constituting the diffusion screen are provided on their coupling or fastening edges with marginal strips (31, 38 and 39) each delimited by a hinge line and provided with holes in which are engaged joining or fastening elements for the purpose on the one hand of fastening on the base (1) of the unit and on the other hand of securing these elements to each other.

4. Lighting appliance in accordance with any one of the preceding claims, characterized in that the diffusion screen (10) corresponds to two faces of a tetrahedron in which the two other faces are constituted by the reflecting rear wall (17) and by the top face (4) of the base (1) of the unit, the edge which separates the two faces of the diffusion screen (10) being placed at the front of the appliance.

5. Lighting appliance in accordance with claim 4, characterized in that the front edge of the diffusion screen (10) is replaced by a triangular facet (13) whose base (12) of small width is rigidly fixed to the front of the base (1) of the unit whilst its vertex coincides with that of the two faces (14) of this diffusion screen (10).

6. Lighting appliance in accordance with claim 4 or claim 5, characterized in that each reflecting lateral cheek (21) has the shape of a dihedron in which the two faces assume the shape of two triangles joined together along one side and another side of which is rigidly fixed either to the corresponding side of the top face of the base (1) of the unit or to the respective rear side of the diffusion screen (10), the third side being directed outwards.

**Patentansprüche**

1. Belichtungsvorrichtung mit hoher Diffusionsfähigkeit zur Verwendung insbesondere bei fotografischen oder kinematografischen Aufnahmen od. dgl., mit einem vor einer Lichtquelle angeordneten Diffusionsfilter (10), wobei die Lichtquelle auf einem Sockel (1) angeordnet ist, dessen Kontur im wesentlichen die Form eines gleichseitigen Dreiecks aufweist, dadurch gekennzeichnet, daß der Diffusionsfilter (10) einen nach hinten offenen Dieder bildet, dessen dreieckige nach außen gewandte Seiten eben oder gebogen sind, und daß der begrenzte Raum über dem Sockel (1) der Anordnung nach hinten von einer reflektierenden Wand (17) abgeschlossen ist, und daß die Oberseite des Sockels ebenfalls reflektierend ist, während in Bezug auf die Seiten (14) des Diffusionsfilters (10) auf jeder Seite eine nach innen gekrümmte oder facettierte Seitenbacke (21) vorgesehen ist, deren dem Diffusionsfilter (10) zugewandte Seite reflektierend ist, und deren Innenränder gleichzeitig formschlüssig mit dem entsprechenden Rand des Sockels (1) der Anordnung und dem entsprechenden rückwärtigen Rand des Diffusionsfilters verbunden sind.

2. Belichtungsvorrichtung nach Anspruch 1, dadurch gekennzeichnet, daß die reflektierende Rückwand (17) und die beiden ebenfalls reflektierend ausgebildeten Seitenbacken (21) von einer einstückig ausgebildeten Platte (20) gebildet werden, welche Gelenklinien (23, 24, 25, 26) dort aufweist, wo die unterschiedlichen teile begrenzt sind sowie zwischen den diversen Facetten der reflektierenden Seitenbacken (21), und daß der Diffusionsfilter (10) selbst durch ein einziges Blatt aus transluzidem Werkstoff gebildet wird, welches Falzlinien (11) an der Grenzstelle zwischen den beiden unterschiedlichen Seiten (14) dieses Filters aufweist.

3. Belichtungsvorrichtung nach Anspruch 2, dadurch gekennzeichnet, daß die die rückwärtige reflektierende Wand (17) bildende Platte (20), die reflektierenden Seitenbacken (21) und auch das aus transluzidem Werkstoff bestehende, den Diffusionsfilter bildende Blatt (10) auf Ihren Verbindungs- oder Befestigungsrändern Randstreifen (31, 38 und 39) aufweisen, die jeweils von einer Gelenklinie begrenzt sind und die Löcher aufweisen, in welche Verbindungs- oder Befestigungsorgane eingreifen, welche einerseits die Befestigung auf dem Sockel (1) der Anordnung und andererseits die Verbindung dieser Elemente untereinander sicherstellen.

4. Belichtungsvorrichtung nach einem der vorhergehenden Ansprüche, dadurch gekennzeichnet, daß der Diffusionsfilter (10) an zwei Seiten einem Tetraeder entspricht, dessen beide andere Seiten durch die reflektierende Rückwand (17) und die Oberseite (4) des Sockels (1) der Anordnung gebildet sind, wobei die Trennkante der beiden Seiten des Diffusionsfilters (10) auf der Vorderseite der Vorrichtung liegt.

5. Belichtungsvorrichtung nach Anspruch 4, dadurch gekennzeichnet, daß die vordere Kante des Diffusionsfilters (10) gegen eine dreieckige Facette (13) ausgetauscht ist, deren Basis (12) von geringer Länge formschlüssig mit der Vorderseite des Sockels (1) der Anordnung verbunden ist, während deren Spitze mit derjenigen der beiden Seiten (14) dieses Diffusionsfilters (10) zusammenfällt.

6. Belichtungsvorrichtung nach Anspruch 4 oder 5, dadurch gekennzeichnet, daß jede der reflektierenden Seitenbacken (21) die Form eines Dieders aufweist, dessen beide Seiten die Form von zwei Dreiecken bilden, die durch eine ihrer Seiten verbunden sind, und dessen andere Seite entweder mit der entsprechenden Seite der Oberseite des Sockels (1) der Anordnung oder mit der entsprechenden Rückseite des Diffusionsfilters (10) formschlüssig verbunden ist, wobei die dritte Seite nach außen gerichtet ist.

FIG_1

FIG_3

FIG_2

FIG_4

FIG_4A

FIG_5

FIG_6

2